# EUROPÄISCHE PATENTSCHRIFT

(11) **EP 1 617 100 B1**
(45) Veröffentlichungstag und Bekanntmachung des Hinweises auf die Patenterteilung: **12.12.2007**
(21) Anmeldenummer: 05015166.1
(22) Anmeldetag: 13.07.2005
(51) Int. Cl.: F16F 13/14, B60G 7/00

(54) **Elastomeres Buchsenlager mit Axialanschlag**
Elastomeric bushing with axial stop
Support en materiau elastomère avec butée axiale

(30) Priorität: 16.07.2004 DE 102004034632
(43) Veröffentlichungstag der Anmeldung: 18.01.2006
(73) Patentinhaber: ZF FRIEDRICHSHAFEN AG, 88038 Friedrichshafen (DE)
(72) Erfinder: Siemer, Hubert, 49413 Dinklage (DE); Hotze, Bernada, 49413 Dinklage (DE)

(56) Entgegenhaltungen:
- EP-A- 0 430 746
- DE-A1- 3 925 241
- DE-C1- 4 203 366

## Beschreibung

Die Erfindung betrifft ein elastomeres Buchsenlager mit mindestens einem Axialanschlag, welcher den axialen Federweg des Lagerkörpers im Hinblick auf dessen Einfedern bei axial in das Lager eingetragenen Schwingungen begrenzt.

Es ist bekannt, Buchsenlager, welche beispielsweise zur Lagerung der Lenker von Fahrwerksaufhängungen bei Kraftfahrzeugen dienen, mit Anschlägen beziehungsweise Wegbegrenzern auszubilden, durch welche der Federweg des beim Eintrag von Schwingungen einfedernden Lagerkörpers begrenzt wird. Hierdurch wird verhindert, dass das Lager durch zu starke Verformungen beziehungsweise Überdehnungen seines elastomeren Lagerkörpers zerstört wird. Dabei sind die Anschläge, insbesondere bei Lagern mit weicher Federcharakteristik, in der Regel so ausgelegt, dass die durch sie bewirkte Wegbegrenzung nicht abrupt, sondern allmählich einsetzt. Dies wird dadurch erreicht, dass die Anschlagflächen zumindest teilweise ebenfalls aus einem Elastomer gebildet sind. Hierdurch werden im Falle des Eintretens der Wegbegrenzung störende Vibrations- und Geräuscheffekte vermieden.

Die Axialanschläge eines gattungsgemäßen Gummilagers bzw. elastomeren Buchsenlagers werden dabei durch zwei in axialer Richtung einander gegenüberliegende, durch einen Spalt beabstandete Anschlagflächen gebildet, wobei beim Einfedern des elastomeren Lagerkörpers durch den Spalt der Freiweg des Lagerkörpers festgelegt wird, respektive das Maß um das die Gummifeder auf der Ausfederseite bis zum Einsetzen der Wegbegrenzung ausfedern kann. Durch die Festlegung der bis zum Eintreten der Wegbegrenzung möglichen Federwege des elastomeren Lagerkörpers wird für das Lager innerhalb des seine Federcharakteristik beschreibenden Kennlinienfeldes ein Arbeitsbereich definiert. Nach dem Stand der Technik sind die Anschlagelemente der Wegbegrenzer am beziehungsweise im Lager an fester Position angeordnet. Im Falle einer Veränderung der auf das Lager einwirkenden Vorlast, wie sie beispielsweise an einem Fahrwerkslager eines Kraftfahrzeugs bei erhöhter Zuladung auftritt, hat dies jedoch den Nachteil, dass sich der Arbeitsbereich des Lagers innerhalb seiner Dämpfungskennlinie in den progressiven Ast der Federcharakteristik verschiebt. Das heißt, es reduziert sich der Freiweg seiner elastomeren Feder auf der Einfederseite, während er sich gleichzeitig auf der Ausfederseite erhöht. Das Lager arbeitet aufgrund der Veränderung der Vorlast, bezogen auf den gegebenen Gesamtfederweg seiner elastomeren Feder nicht mehr in einem symmetrischen Arbeitsbereich, da der Anschlag vom Federkörper, bezogen auf eine Einfederrichtung, eher erreicht wird, als in der entgegengesetzten. Am Fahrzeug macht sich dies durch eine Verschlechterung der Fahrdynamik und des Komforts bemerkbar.

Darüber hinaus ist aus der EP 0 430 746 B1 ein elastomeres Buchsenlager mit einer Innenhülse, einem die Innenhülse konzentrische umgebenden und mit ihr durch Vulkanisation verbundenen elastomeren Lagerkörper bekannt. Der elastomere Lagerkörper wird von einer Außenhülse umgeben, wobei der axiale Federweg des Lagerkörpers durch einen verstellbaren Axialanschlag begrenzt. Hierzu ist eine einen axialen Spalt bindende Anschlagfläche am Lagerkörper ausgebildet und die andere Anschlagfläche an einem Anschlagelement. Das Anschlagelement wird zur Einstellung des Spaltes zwischen den Anschlagflächen mittels eines rotatorischen Antriebs über und eines Gewindetriebes zur Umwandlung der rotatorischen Bewegung in eine translatorische axial verschoben. Diese Anordnung ist vergleichsweise aufwendig und erfordert insbesondere für den Gewindetrieb einen erheblichen Bauraum. Durch die Vielzahl der Bauteile ist diese Anordnung zudem aufwendig und damit kostenintensiv zu fertigen und zu montieren.

Aufgabe der Erfindung ist es daher, ein elastomeres Buchsenlager gegenüber dem Stand der Technik so weiterzubilden, dass dieses mit vereinfachten Mitteln in seinem Dämpfungsverhalten an den jeweiligen Einsatzzweck und/oder sich ändernde Vorlasten anpassbar ist.

Die Aufgabe wird durch ein Gummilager mit den Merkmalen des Hauptanspruchs gelöst. Vorteilhafte Aus- beziehungsweise Weiterbildungen des erfindungsgemäßen Gummilagers sind durch die Unteransprüche gegeben.

Das zur Lösung der Aufgabe vorgeschlagene elastomere Buchsenlager besteht gattungsgemäß aus einer Innenhülse, einem die Innenhülse vorzugsweise konzentrisch umgebenden und mit ihr durch Vulkanisation verbundenen elastomeren Lagerkörper und einer den Lagerkörper mit der Innenhülse aufnehmenden Außenhülse. Zudem ist an dem Lager mindestens ein Axialanschlag ausgebildet, welcher den axialen Federweg des als elastomere Feder wirkenden Lagerkörpers im Hinblick auf dessen Einfedern bei axial in das Lager eingetragenen Schwingungen begrenzt. Der Axialanschlag ist durch zwei in axialer Richtung einander gegenüberliegende, durch einen Spalt beabstandete Anschlagflächen gebildet, wobei eine der Anschlagflächen am Lagerkörper und die andere an der Innenhülse oder einem von der Innenhülse getragenem Anschlagelement ausgebildet ist. Erfindungsgemäß ist das Lager so ausgebildet, dass die am Lagerkörper ausgebildete Anschlagfläche und die ihr gegenüberliegende Anschlagfläche mittels eines Stellgliedes in der Umfangsrichtung des Lagers gegeneinander verdrehbar sind, wobei sich gleichzeitig mit einer entsprechenden, durch eine Verdrehung des Stellgliedes bewirkten Relativbewegung der Anschlagflächen ihr durch den Spalt bestimmter Abstand zueinander verändert. Über die Änderung der Größe des Spaltes bzw. des Abstandes zwischen den Anschlagflächen wird der für den Lagerkörper, bei seinem durch axial auf das Lager einwirkende Schwingungen bedingten Einfedern, gegebene Freiweg verändert. Hierdurch ist es möglich, einer sich erhöhenden Vorlast, wie sie beispielsweise bei der Erhöhung der Zuladung eines mit dem Lager ausgestatteten Fahrzeugs auftritt, dadurch zu begegnen, dass der sich auf der Einfederseite vergrößernde Spalt durch Verdrehen des Stellglieds und eine daraus resultierende Verdrehung entsprechender Lagerteile wieder auf das zuvor gegebene Maß zurückgeführt wird, so dass die durch die Erhöhung der Vorlast bezüglich der Dämpfungskennlinie des Lagers auftretende Arbeitspunktverschiebung kompensiert wird. Entsprechend umgekehrt kann eine Verringerung der Vorlast ausgeglichen werden. Abgesehen von der Kompensation auftretender Vorlaständerungen eröffnet die erfindungsgemäße Ausbildung des Lagers grundsätzlich auch die Möglichkeit, die Freiwege des Lagerkörpers in der axial positiven und/oder negativen Richtung an den jeweiligen Einsatzzweck des Lagers anzupassen.

Es ist im Sinne der Erfindung, dass bei dem vorgestellten Buchsenlager an beiden axialen Enden Axialanschläge vorgesehen und diese derart ausgebildet sind, das sie bzw. der zwischen ihren jeweiligen Anschlagflächen bestehende Spalt unabhängig voneinander einstellbar sind.

Bei einer dem erfindungsgemäßen Grundgedanken folgenden, Ausbildungsform des Buchsenlagers ist an dessen elastomeren Lagerkörper an mindestens einer seiner axialen Stirnseiten eine Anschlagfläche mit einem bezogen auf den Lagerumfang sägezahnförmigen oder wellenförmigen Verlauf ausgebildet. Diese Anschlagfläche bildet gemeinsam mit einer ihr gegenüberliegenden, durch einen Spalt beabstandeten Anschlagfläche eines vom entsprechenden axialen Ende der Innenhülse getragenen Anschlagelements einen Axialanschlag aus. Dabei ist die Anschlagfläche des letztgenannten Anschlagelements, korrespondierend mit der Anschlagfläche des Lagerkörpers, bezogen auf die Umfangsrichtung, ebenfalls mit einem sägezahnförmigen oder wellenförmigen Verlauf ausgebildet. Das Anschlagelement ist an der Innenhülse über eine Gleitbuchse und/oder Gleitscheibe beweglich angeordnet und mittels des Stellglieds auf dem Umfang der Innenhülse verdrehbar. Entsprechend einer bevorzugten Weiterbildung dieser Ausbildungsform besteht die an dem Anschlagelement ausgebildete Anschlagfläche aus einem Elastomer.

Wie bereits dargestellt, kann die Betätigung bzw. die Verdrehung Stellglieds mittels eines Elektromotors erfolgen, der mit dem Stellglied vorzugsweise über ein Getriebe in eine Wirkverbindung gebracht ist. Gemäß einer besonders bevorzugten Weiterbildung der Erfindung sind der Elektromotor und das mit ihm in eine Wirkverbindung gebrachte Stellglied Teil eines Regelungskreises, bei dem die auf das Buchsenlager wirkende Vorlast und der zwischen den Anschlagflächen des oder der Axialanschläge bestehende Abstand mittels Sensoren erfasst, daraus in einer Verarbeitungseinheit eine Regelgröße abgeleitet und der das Stellglied betätigende Elektromotor zur Anpassung des Federwegs an eine sich ändernde Vorlast auf der Grundlage dieser Regelgröße mit Hilfe eines Reglers gesteuert wird.

Die beschriebenen Ausbildungsformen des elastomeren Buchsenlagers können jeweils auch als Hydrolager ausgebildet sein, wobei in dem Lagerkörper mindestens zwei über einen Strömungskanal miteinander verbundene Kammern zur Aufnahme eines fluiden Dämpfungsmittels ausgebildet sind.

Die Erfindung soll nachfolgend anhand von Ausführungsbeispielen nochmals näher erläutert werden. In den zugehörigen Zeichnungen zeigen
- Fig. 1a - 1d:: Die wesentlichen Bestandteile einer möglichen Ausbildung eines Buchsenlagers und das montierte Lager in räumlicher Darstellung,
- Fig. 2:: Eine Ausbildungsform des erfindungsgemäßen Buchsenlagers ebenfalls in räumlicher Darstellung,
- Fig. 3:: Eine Variante der Ausbildungsform nach Fig. 2 in einem Längsschnitt,
- Fig. 4:: Eine weitere Variante der Ausbildungsform nach Fig. 2 in einem Längsschnitt.

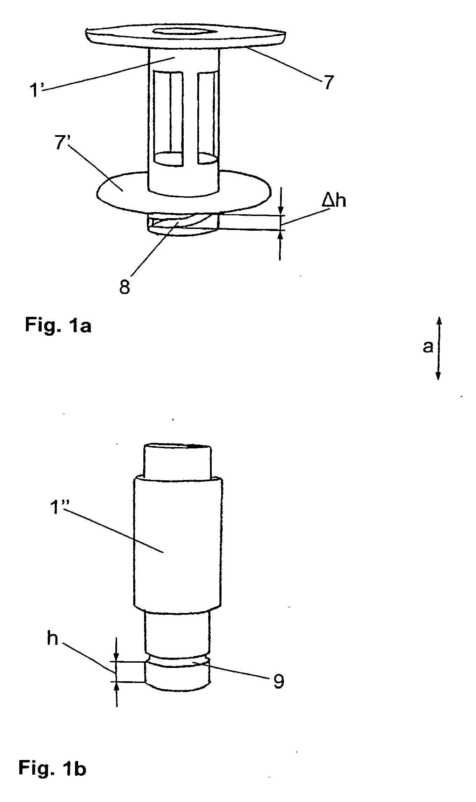

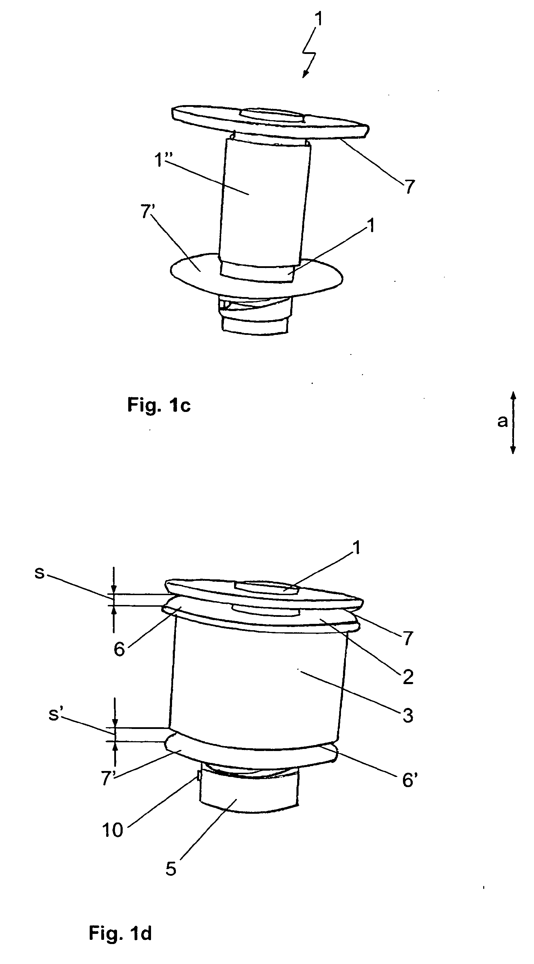

Die Fig. 1a bis 1d zeigt eine mögliche Ausführung eines Buchsenlagers, wobei in den einzelnen Figuren die wesentlichen Bestandteile des Lagers und die Art ihrer Verbindung miteinander erkennbar sind. Bei der dargestellten Ausführungsform welche lediglich zur Abgrenzung gegenüber der Erfindung dient, handelt es sich um ein Buchsenlager mit einer zweiteiligen Innenhülse 1, 1', 1". Die Innenhülse 1, 1', 1" besteht aus einem ersten Hülsenteil 1', gemäß Fig. 1a, und einem zweiten Hülsenteil 1", gemäß Fig. 1b, die beim montierten Lager, gemäß Fig. 1c, miteinander in Eingriff gebracht sind. Dabei können die beiden Hülsenteile 1', 1" ineinander gleiten, so dass sie axial gegeneinander verschieblich sind. Die Fig. 1d zeigt das fertig montierte Lager, bei dem die zweiteilige Innenhülse 1 in an sich bekannter Weise konzentrisch von einem elastomeren Lagerkörper 2 umgeben ist, welcher mit der Innenhülse 1 durch Vulkanisation verbunden ist. Lagerkörper 2 und Innenhülse 1 werden von einer Außenhülse 3 aufgenommen. Durch einander in axialer Richtung a gegenüberliegende Anschlagflächen 6, 6', 7, 7', nämlich Anschlagflächen 6, 6' am Lagerkörper 2 und Anschlagflächen 7, 7' an einem Hülsenteil 1' der Innenhülse 1, sind an beiden axialen Enden des Buchsenlagers Axialanschläge 6, 6', 7, 7' ausgebildet, welche dadurch, dass die Anschlagflächen 6, 6' des Lagerkörpers 2 beim Einfedern von diesem jeweils in Richtung einer der Anschlagflächen 7, 7' des Hülsenteils 1' der Innenhülse 1 mitgenommen werden, durch das aneinander Anschlagen der Anschlagflächen 6, 7 und 6', 7' den Federweg des elastomeren Lagerkörpers 2 in der axialen Richtung a begrenzen. Hierbei legt die Größe des Spaltes s, s' den Freiweg des Lagerkörpers 2 in der positiven bzw. negativen axialen Richtung a fest, wobei es im Zusammenhang mit der Darstellung der Funktionsweise des Lagers unerheblich ist, welches als die axial positive und welches als die axial negative Richtung betrachtet wird, da eine entsprechende Festlegung nur relativ ist.

Wie aus den Fig. 1a und 1b erkennbar, weisen die Hülsenteile 1', 1" eine im Wesentlichen hohlzylindrische Form auf. In dem Hülsenteil 1" ist eine umlaufende Nut 9 oder Furche ausgebildet, wobei diese Nut 9 auf axial konstanter Höhe h bzw. mit konstantem Abstand zum axialen Ende des Hülsenteils 1" auf dessen Außenumfang umläuft. In dem Hülsenteil 1' ist, in Bezug auf die ineinander gefügten Hülsenteile 1', 1", im Bereich der Nut 9 des anderen Hülsenteils 1" ein sich über Teile seines Umfangs erstreckender Durchbruch 8 ausgebildet, welcher in axialer Richtung eine Steigung Δh aufweist und dadurch die Nut 9 des Hülsenteils 1" quert. Sofern nun ein Stift 10 eines drehbaren Stellglieds 5, wie in der Fig. 1d gezeigt, den Durchbruch 8 durchragt und in die seiner Führung dienende Nut 9 des Hülsenteils 1" hineinragt, werden bei einer Drehung des Stellgliedes 5 die beiden Hülsenteile 1', 1" in axialer Richtung a gegeneinander verschoben. Durch die axiale Verschiebung ändert sich die Größe des Spaltes s bzw. s'.

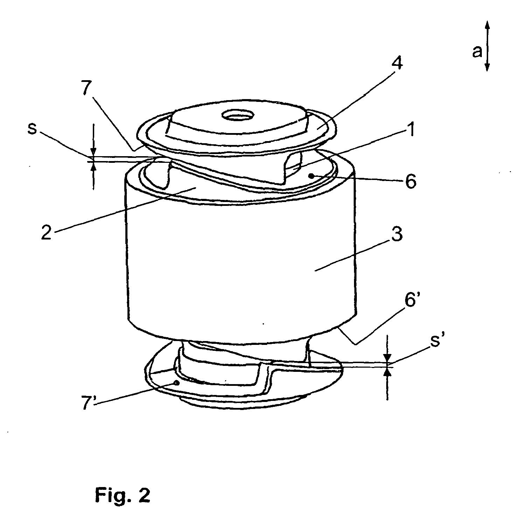

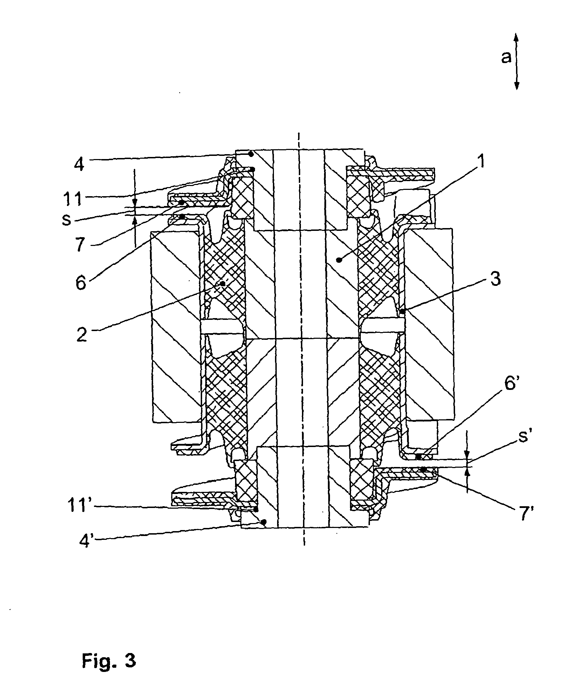

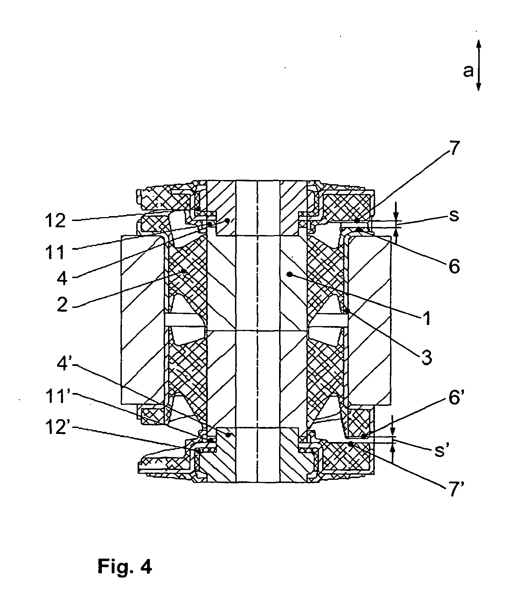

Die Fig. 2 zeigt eine mögliche Ausführungsform des erfindungsgemäßen Buchsenlagers. Das Lager weist zunächst den üblichen Aufbau, mit einer zylinderförmigen Innenhülse 1, einem die Innenhülse 1 umgebenden und mit ihr durch Vulkanisation verbundenen Lagerkörper 2 und einer die genannten Teile aufnehmenden Außenhülse 3 auf. An beiden axialen Enden des Buchsenlagers sind Axialanschläge 6, 6', 7, 7' vorhanden, die jeweils durch eine Anschlagfläche 6, 6' am Lagerkörper 2 und eine Anschlagfläche 7, 7' an einem Anschlagelement 4, 4' ausgebildet sind. Sowohl die Anschlagflächen 6, 6' am Lagerkörper 2, als auch die an den Anschlagelementen 4, 4' ausgebildeten Anschlagflächen 7, 7' weisen einen sägezahnförmigen Verlauf auf. Es ist erkennbar, dass der Freiweg des Lagerkörpers 2 bzw. der durch ihn gebildeten elastomeren Feder in der jeweiligen axialen Richtung durch den Spalt s, s' an der Stelle des geringsten Abstandes zwischen den Anschlagflächen 6, 6', 7, 7' bestimmt wird. Bestandteil der Anschlagelemente 4, 4' ist eine, in der Fig. 2 nicht erkennbare Gleitscheibe 11, 11' (siehe Fig. 3) oder eine Gleitscheibe (11, 11') und eine Gleitbuchse 12, 12' (siehe Fig. 4), mittels welcher die Anschlagelemente 4, 4' an der Innenhülse 1 auf deren Umfang beweglich angeordnet sind. Beispielsweise zum Zweck der Anpassung an eine geänderte Vorlast, können die Anschlagelemente 4, 4' so mittels eines in der Figur ebenfalls nicht gezeigten Stellgliedes in der Umfangsrichtung gegen den Lagerkörper 2 verdreht werden. Dadurch ist die Größe des Spalts s, s' und somit der Arbeitsbereich des Lagers bezogen auf sein Dämpfungsverhalten gegenüber axial eingetragenen dynamischen Schwingungen veränderbar. Für den Fachmann wird erkennbar, dass die Anschlagelemente 4, 4' bei Bedarf und entsprechender Ausgestaltung des Stellgliedes 5 oder Anordnung mehrerer Stellglieder auch unabhängig voneinander gegen den Lagerkörper 2, 2' verdrehbar und damit die Spalte s, s' unabhängig veränderbar sein können.

Die Anschlagelemente 4, 4' des Lagers nach der Fig. 2 und deren Anbindung an die Innenhülse 1 können unterschiedlich gestaltet sein. Dies wird durch die Fig. 3 und 4 verdeutlicht, welche unterschiedliche Varianten dieser grundsätzlichen Ausbildungsform in einem Längsschnitt zeigen. Dabei sind die Anschlagelemente 4, 4' bei der Variante gemäß Fig. 3 über Gleitscheiben 11, 11' und bei der Variante gemäß Fig. 4 über Gleitbuchsen 12, 12' und Gleitscheiben 11, 11' in der Umfangsrichtung beweglich an die Innenhülse 1 bzw. die übrigen Lagerkomponenten angebunden. In den durch die Fig. 3 und 4 wiedergegebenen Schnittdarstellungen der hinsichtlich ihrer Wirkungsweise gleichartigen Ausbildungsvarianten sind die wesentlichen Teile des Lagers nochmals gut erkennbar. Die Verdrehung der Anschlagelemente 4, 4' wird mittels eines, wie gesagt bei dieser Ausbildungsform nicht gezeigten, Stellgliedes bewirkt, welches an den Anschlagelementen 4, 4' angreift und vorzugsweise im Rahmen eines Regelkreises durch einen Elektromotor, gegebenenfalls über Zwischenschaltung eines Getriebes, betätigt wird.

In Abwandlung der vorgestellten Ausbildungsform, insbesondere der in Fig. 2 gezeigten, ist es auch denkbar, die Anschlagflächen konusförmig einander zugeneigt auszubilden, also beispielsweise die Anschlagflächen 7, 7' der Anschlagelemente 4, 4' schräg nach außen und die mit ihnen korrespondierenden Anschlagflächen 6, 6' des Lagerkörpers 2 schräg nach innen geneigt auszubilden. Dadurch wirken die Anschlagflächen 6, 7, 6', 7' für den Federweg des Lagerkörpers 2 bzw. der durch ihn gebildeten Feder sowohl bezogen auf die axiale als auch auf die radiale Richtung wegbegrenzend. Auf diese Weise ist ein Buchsenlager realisierbar, bei dem die Axial- und die Radialanschläge, hinsichtlich des jeweiligen Freiwegs der elastomeren Feder 2, einer Vorlaständerung nachführbar sind.

Soweit der Lagerkörper 2 und die Innenhülse 1 der Ausbildungsvarianten nach den Fig. 3 und 4 in axialer Richtung eine Zweiteilung aufweisen, ist dies, anders als bei der Ausbildungsform nach der Fig. 1, in erster Linie fertigungstechnisch (der in die Außenhülse einzubringende Lagerkörper weist an den axialen Enden eine Auskragung auf und ist daher nicht ohne weiteres von einer Seite her in die Außenhülse einschiebbar) nicht aber durch die vorstehend dargestellte erfindungsgemäße Ausgestaltung und Wirkungsweise des Lagers bedingt.

### Bezugszeichenliste

- 1: Innenhülse
- 1', 1": Teil der Innenhülse 1 bzw. Innenhülsenteil
- 2': Lagerkörper, elastomere Feder
- 3: Außenhülse
- 4: Anschlagelement
- 5: Stellglied
- 6, 6': Anschlagfläche (Teil eines Axialanschlags)
- 7, 7': Anschlagfläche (Teil eines Axialanschlags)
- 8: Durchbruch
- 9: Nut, Furche
- 10: Stift
- 11, 11': Gleitscheibe
- 12, 12': Gleitbuchse

- a: axial bzw. axiale Richtung
- s, s': Abstand bzw. Spalt
- h: Höhe
- Δh: Steigung

## Patentansprüche

1. Elastomeres Buchsenlager mit einer ein- oder mehrteiligen Innenhülse (1, 1', 1"), einem die Innenhülse (1, 1', 1") vorzugsweise konzentrisch umgebenden und mit ihr durch Vulkanisation verbundenen, eine elastomere Feder ausbildenden elastomeren Lagerkörper (2), einer den Lagerkörper (2) mit der Innenhülse (1, 1', 1") aufnehmenden Außenhülse (3) und mindestens einem Axialanschlag (6, 6', 7, 7'), welcher den axialen Federweg des Lagerkörpers (2) im Hinblick auf dessen Einfedern bei axial in das Lager eingetragenen Schwingungen begrenzt und durch zwei in axialer Richtung (a) einander gegenüberliegende, durch einen Spalt (s, s') beabstandete Anschlagflächen (6, 7, 6', 7') gebildet ist, wobei eine Anschlagfläche (6, 6') am Lagerkörper (2) und eine Anschlagfläche (7, 7') an der Innenhülse (1, 1', 1") oder einem von der Innenhülse (1, 1', 1") getragenem Anschlagelement (4, 4') ausgebildet ist,
**dadurch gekennzeichnet, dass**
die erste Anschlagfläche (6, 6') und die zweite Anschlagfläche (7, 7') mittels eines Stellgliedes (5) in der Umfangsrichtung des Lagers gegeneinander verdrehbar sind, wobei gleichzeitig mit einer entsprechenden, durch eine Verdrehung des Stellgliedes bewirkten Relativbewegung der Anschlagflächen (6, 7, 6', 7') ihr durch den Spalt (s, s') bestimmter Abstand zueinander veränderbar ist.

2. Elastomeres Buchsenlager nach Anspruch 1,
**dadurch gekennzeichnet, dass**
dieses zwei an seinen axialen Enden angeordnete Axialanschläge (6, 6', 7, 7') aufweist, für welche der Spalt (s, s') zwischen ihren Anschlagflächen (6, 7, 6', 7') unabhängig voneinander einstellbar ist.

3. Elastomeres Buchsenlager nach Anspruch 1 oder 2,
**dadurch gekennzeichnet, dass**
der elastomere Lagerkörper (2) an mindestens einer seiner axialen Stirnseiten eine Anschlagfläche (6, 6') mit einem bezogen auf den Lagerumfang sägezahnförmigen oder wellenförmigen Verlauf aufweist, welche gemeinsam mit einer ihr gegenüberliegenden, durch einen Spalt (s, s') beabstandeten Anschlagfläche (7, 7') eines vom entsprechenden axialen Ende der Innenhülse (1) getragenen Anschlagelements (4, 4') einen Axialanschlag (6, 6', 7, 7') ausbildet, wobei die Anschlagfläche (7, 7'), korrespondierend mit der Anschlagfläche (6, 6') des Lagerkörpers und bezogen auf die Umfangsrichtung, ebenfalls einen sägezahnförmigen oder wellenförmigen Verlauf aufweist und das mittels des Stellglieds (5) auf dem Umfang der Innenhülse (1) bewegliche Anschlagelement (4, 4') über eine Gleitscheibe (11, 11') und/oder Gleitbuchse (12, 12") an die Innenhülse (1) angebunden ist.

4. Elastomeres Buchsenlager nach Anspruch 3,
**dadurch gekennzeichnet, dass**
die an dem Anschlagelement (4, 4') ausgebildete Anschlagfläche (7, 7') aus einem Elastomer besteht.

5. Elastomeres Buchsenlager nach einem der Ansprüche 1 bis 4,
**dadurch gekennzeichnet, dass**
das Stellglied (5), vorzugsweise über ein Getriebe, mit einem das Stellglied (5) betätigenden Elektromotor in eine Wirkverbindung gebracht ist.

6. Elastomeres Buchsenlager nach Anspruch 5,
**dadurch gekennzeichnet, dass**
der Elektromotor und das mit ihm in eine Wirkverbindung gebrachte Stellglied (5) Teil eines Regelungskreises sind, bei dem die auf das Buchsenlager wirkende Vorlast und der zwischen den Anschlagflächen (6, 7, 6', 7') des oder der Axialanschläge (6, 6', 7, 7') bestehende Abstand (s, s') mittels Sensoren erfasst, daraus in einer Verarbeitungseinheit eine Regelgröße abgeleitet und der das Stellglied (5) betätigende Elektromotor zur Anpassung des Federwegs an eine sich ändernde Vorlast auf der Grundlage der Regelgröße mit Hilfe eines Reglers gesteuert wird.

7. Elastomeres Buchsenlager nach einem der Ansprüche 1 bis 6,
**dadurch gekennzeichnet, dass**
in dem Lagerkörper (1) mindestens zwei über einen Strömungskanal miteinander verbundene Kammern zur Aufnahme eines fluiden Dämpfungsmittels ausgebildet sind.

## Claims

1. Elastomer bush bearing have an inner sleeve (1, 1', 1") of one or more parts, an elastomer bearing body (2), which preferably concentrically surrounds the inner sleeve (1, 1', 1") and is connected to it by vulcanisation and forms an elastomer spring, an outer sleeve (3) receiving the bearing body (2) with the inner sleeve (1, 1', 1"), and at least one axial stop (6, 6', 7, 7'), which limits the axial spring travel of the bearing body (2) with regard to its compression when oscillations are introduced axially into the bearing and which is formed by two stop faces (6, 7, 6', 7') which lie opposite each other in the axial direction (a) and are spaced apart by a gap (s, s'), one stop face (6, 6') being formed on the bearing body (2) and one stop face (7, 7') being formed on the inner sleeve (1, 1', 1") or on a stop element (4, 4') supported by the inner sleeve (1, 1', 1"),
**characterised in that**
the first stop face (6, 6') and the second stop face (7, 7') are rotatable relative to each other in the circumferential direction of the bearing by means of an actuator (5), their distance from one another as defined by the gap (s, s') being changeable simultaneously with a corresponding relative movement of the stop faces (6, 6', 7, 7') effected by a rotation of the actuator.

2. Elastomer bush bearing according to Claim 1,
**characterised in that**
the said bush bearing has two axial stops (6, 6', 7, 7') arranged at its axial ends, with the gap (s, s') between their stop faces (6, 7, 6', 7') being adjustable independently of each other.

3. Elastomer bush bearing according to Claim 1 or 2,
**characterised in that**
the elastomer bearing body (2) has on at least one of its axial end faces a stop face (6, 6') having a saw-tooth-shaped or wave-shaped course in relation to the bearing circumference, which stop face (6, 6'), together with a stop face (7, 7') lying opposite it and spaced apart by a gap (s, s'), of a stop element (4, 4'), which is supported by the corresponding axial end of the inner sleeve (1), forms an axial stop (6, 6', 7, 7'), the stop face (7, 7'), in a manner corresponding to the stop face (6, 6') of the bearing body, likewise having a saw-tooth-shaped or wave-shaped course in relation to the circumferential direction, and the stop element (4, 4'), which is movable by means of the actuator (5) on the circumference of the inner sleeve (1), being connected to the inner sleeve (1) via a sliding disc (11, 11') and/or sliding bush (12, 12').

4. Elastomer bush bearing according to Claim 3,
**characterised in that**
the stop face (7, 7') formed on the stop element (4, 4') is made of an elastomer.

5. Elastomer bush bearing according to one of Claims 1 to 4,
**characterised in that**
the actuator (5) is operatively connected, preferably via a gearing, to an electric motor which actuates the actuator (5).

6. Elastomer bush bearing according to Claim 7,
**characterised in that**
the electric motor and the actuator (5) which is operatively connected to it are part of a control circuit, which uses sensors to detect the preload acting on the bush bearing and the distance (s, s') between the stop faces (6, 7, 6', 7') of the axial stop(s) (6, 6', 7, 7'), and in which a controlled variable is derived therefrom in a processing unit, and the electric motor which actuates the actuator (5) is controlled with the aid of a controller on the basis of the controlled variable for the purpose of adapting the spring travel to a changing preload.

7. Elastomer bush bearing according to one of Claims 1 to 6,
**characterised in that**
at least two chambers which are connected to each other via a flow channel are formed in the bearing body (1) for the purpose of receiving a fluid damping medium.

## Revendications

1. Palier à douille en matériau élastomère comprenant une douille interne à une ou plusieurs parties (1, 1', 1"), un corps de palier élastomère (2) entourant de préférence de manière concentrique la douille interne (1, 1', 1") et relié à celle-ci par vulcanisation, formant un ressort élastomère, une douille externe (3) recevant le corps de palier (2) avec la douille interne (1, 1',1") et, au moins, une butée axiale (6, 6', 7, 7'), qui limite la course élastique axiale du corps de palier (2) compte tenu de sa compression lors d'oscillations introduites axialement dans le palier et qui est constituée de deux surfaces de butée (6, 7, 6', 7'), opposées l'une à l'autre dans une direction axiale (a), espacées par une fente (s, s'), une surface de butée (6, 6') étant formée sur le corps de palier (2) et une surface de butée (7, 7') étant formée sur la douille interne (1,1', 1") ou sur un élément de butée (4, 4') porté par la douille interne (1, 1', 1") **caractérisé en ce que**
l'on peut faire pivoter la première surface de butée (6, 6') et la seconde surface de butée (7, 7'), l'une par rapport à l'autre, à l'aide d'un élément de réglage (5) dans la direction périphérique du palier, tandis que leur distance l'une par rapport à l'autre, déterminée par la fente (s, s'), est modifiable par un mouvement relatif correspondant des surfaces de butée (6, 7, 6', 7'), provoqué par une rotation de l'élément de réglage.

2. Palier à douille élastomère selon la revendication 1, **caractérisé en ce qu'**il présente deux butées axiales (6, 6', 7, 7') agencées sur ses extrémités axiales, pour lesquelles on peut régler la fente (s, s') entre leurs surfaces de butée (6, 7, 6', 7') indépendamment l'une de l'autre.

3. Palier à douille élastomère selon l'une quelconque des revendications 1 ou 2, **caractérisé en ce que** le corps de palier élastomère (2) présente sur au moins un de ses côtés frontaux axiaux une surface de butée (6, 6') ayant, par rapport à la périphérie du palier, un profil en dents de scie ou ondulé, qui forme une butée axiale (6, 6', 7, 7'), conjointement avec une surface de butée (7, 7'), opposée à elle et espacée par une fente (s, s'), d'un élément de butée (4, 4') porté par l'extrémité axiale correspondante de la douille interne (1), la surface de butée (7, 7'), correspondant à la surface de butée (6, 6') du corps de palier formant également, par rapport à la direction périphérique, un profil en dents de scie ou ondulé et l'élément de butée (4, 4'), mobile à l'aide d'un élément de réglage (5) sur la périphérie d'une douille interne (1), étant fixé, via un disque de guidage (11, 11') et/ou une douille de guidage (12, 12"), à la douille interne (1).

4. Palier à douille élastomère selon la revendication 3, **caractérisé en ce que** la surface de butée (7, 7') formée sur l'élément de butée (4, 4') est constituée d'un élastomère.

5. Palier à douille élastomère selon l'une quelconque des revendications 1 à 4, **caractérisé en ce que** l'élément de réglage (5) est mis en interaction avec un moteur électrique actionnant l'élément de réglage (5), de préférence par l'intermédiaire d'un réducteur.

6. Palier à douille élastomère selon la revendication 5, **caractérisé en ce que** le moteur électrique et l'élément de réglage (5), mis en interaction avec lui, font partie d'un circuit de régulation, dans lequel la précontrainte agissant sur le palier à douille et la distance (s, s') existant entre les surfaces de butée (6, 7, 6', 7') de la ou des butées axiales (6, 6', 7, 7') sont détectées par des capteurs, une grandeur de réglage est dérivée à partir de là dans une unité de traitement et le moteur électrique actionnant l'élément de réglage (5) est commandé pour adapter la course élastique à une précontrainte changeante, sur la base de la grandeur de réglage à l'aide d'un dispositif de réglage.

7. Palier à douille élastomère selon l'une quelconque des revendications 1 à 6, **caractérisé en ce que** le corps de palier (1) est pourvu d'au moins deux chambres reliées l'une à l'autre via un canal d'écoulement pour recevoir un agent d'amortissement fluide.
